# EUROPEAN PATENT APPLICATION

(11) **EP 3 358 859 A1**
(43) Date of publication of application: **08.08.2018**
(21) Application number: 16851360.4
(22) Date of filing: 23.09.2016
(51) Int. Cl.: H04R 3/12, G10L 19/00, H04N 21/436, H04N 21/658

(54) **CONTROL TERMINAL DEVICE, AUDIO SYSTEM, AND AUDIO SYSTEM CONTROL METHOD**

(30) Priority: 30.09.2015 JP 2015194508
(71) Applicant: Yamaha Corporation, Hamamatsu-shi, Shizuoka 430-8650 (JP)
(72) Inventor: SUYAMA, Akihiko, Hamamatsu-shi Shizuoka 430-8650 (JP); MUSHIKABE, Kazuya, Hamamatsu-shi Shizuoka 430-8650 (JP); TSUKADA, Keisuke, Hamamatsu-shi Shizuoka 430-8650 (JP)
(74) Representative: Cabrerizo Polo, Dominik Mariano
(86) International application number: PCT/JP2016/078007
(87) International publication number: WO 2017/057186

(57) **Abstract**

A control terminal includes an operation portion and a control portion. The operation portion receives a group setting in which, with respect to a first audio device among a plurality of audio devices that are connected to each other, the first audio device having a plurality of audio output channels including a main channel and a sub channel, the main channel and the sub channel are set as respective separate groups. The control portion transmits a command related to the group setting to the plurality of audio devices.

## Description

### Technical Field

A preferred embodiment of the present invention relates to a control terminal that controls a plurality of audio devices.

### Background Art

An audio system of recent years includes a system in which a plurality of audio devices (play devices) arranged in each room (area) such as a living room or a bedroom are connected to a network (wireless network, in particular), and an operation such as content playing of each of the audio devices is controlled by a portable terminal device (see Patent Literature 1, for example) .

A user, by operating a portable terminal device, can cause one selected audio device to execute content playing or the like. In addition, the user, by operating a portable terminal device, can also specify (select) a plurality of audio devices to perform a group setting. Then, the user can also cause the audio devices that belong to a group to execute synchronous playing of the same content.

### Citation List

### Patent Literature

Patent Literature 1: Japanese Unexamined Patent Application Publication No. 2013-251594

### Summary of Invention

### Technical Problem

Of devices having a plurality of audio output channels, some devices have been put into practical use, having a function (called as "zone function") of using an extra play channel (sub channel) and performing simultaneous playing of the content of a main channel in a different room.

An object of a preferred embodiment of the present invention is to perform group play in a plurality of audio devices including a device having a plurality of audio output channels.

### Solution to Problem

A control terminal according to a preferred embodiment of the present invention is provided with an operation portion and a control portion. The operation portion receives a group setting in which, with respect to a first audio device among a plurality of audio devices that are connected to each other, and the first audio device having a plurality of audio output channels including a main channel and a sub channel, the main channel and the sub channel are set as respective separate groups. The control portion transmits a command related to the group setting to the plurality of audio devices.

### Advantageous Effects of Invention

According to a preferred embodiment of the present invention, even when a device that has a plurality of audio output channels is included, group play may be performed by the same group play operation as the conventional group play operation.

### Brief Description of the Drawings

Fig. 1 is a diagram illustrating a configuration of a network connection of an audio system.
Fig. 2 is a diagram illustrating an arrangement of each audio device of the audio system 10.
Fig. 3 is a block diagram of an audio device (single zone device).
Fig. 4 is a block diagram of an audio device (multi zone device).
Fig. 5 is a block diagram of a portable phone that functions as a controller.
Fig. 6 illustrates an example of a system management table that is set to a master device and a controller.
Fig. 7 illustrates an example of an audio control table that is set to the controller.
Fig. 8 is a diagram illustrating a general configuration of group play.
Fig. 9 is a diagram illustrating an input and output of an assigner of the multi zone device.
Fig. 10 is a diagram illustrating an example of a group including the multi zone device.
Fig. 11 is a diagram illustrating an example of a group including the multi zone device.
Fig. 12 is a diagram illustrating an example of a group including the multi zone device.
Fig. 13 is a diagram illustrating an example of a group including the multi zone device.
Fig. 14 is a diagram illustrating an example of a group including the multi zone device.
Fig. 15 is a diagram illustrating an input selection table of a group including the multi zone device.
Fig. 16(A), Fig. 16(B), and Fig. 16(C) are diagrams illustrating a procedure of group setting in the controller.
Fig. 17(A), Fig. 17(B), and Fig. 17(C) are diagrams illustrating a procedure of group play in the controller.
Fig. 18 is a flow chart illustrating processing operation at a time of the group play of the controller.

### Detailed Description of Preferred Embodiments

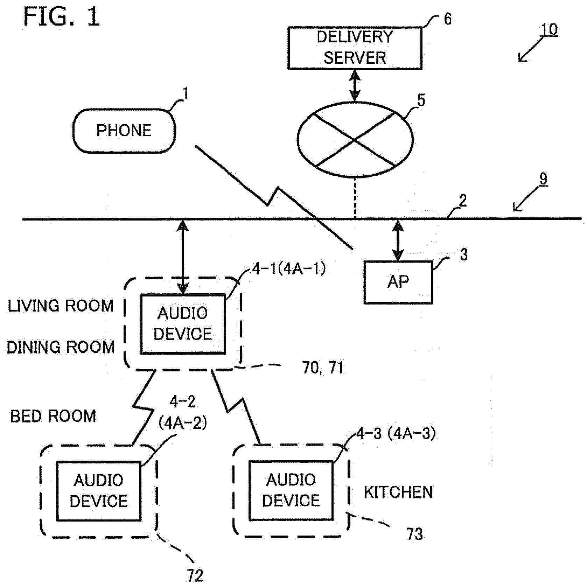

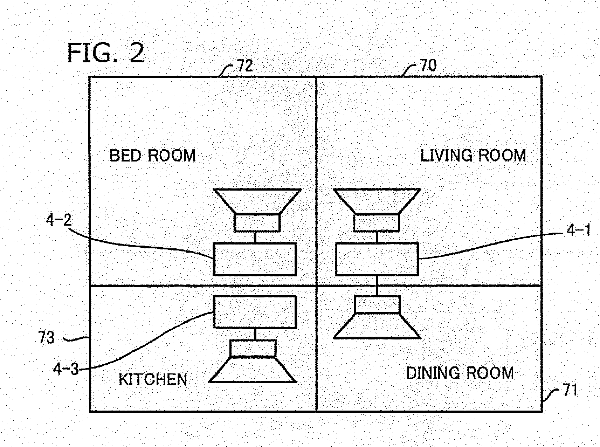

Fig. 1 is a diagram illustrating a configuration of a network connection of an audio system 10. Fig. 2 is a diagram illustrating an arrangement of each audio device of the audio system 10.

The audio system 10 has three sets of audio devices 4 (4-1 to 4-3) that are respectively installed in separate rooms (Room) . The audio device 4-2 and the audio device 4-3 are single zone devices, and are respectively installed in a kitchen (Kitchen) 72 and a bedroom (Bed Room) 74. The audio device 4-1 is a multi zone device that covers a plurality of (two in the present preferred embodiment) rooms. The audio device 4-1 is installed in a living room (Living Room) 70, and outputs sound to the living room as zone 1 corresponding to a main channel. Furthermore, the audio device 4-1 may output sound to a dining room (Dining Room) 71 as zone 2 corresponding to a sub channel.

In addition, the audio system 10 has a multifunctional portable phone (portable terminal device) 1 that functions as a controller 1. The audio devices 4 (4-1 to 4-3) and the portable phone 1 are connected to each other in a network 9 including a wired LAN 2 and an access point (external access point) 3. Each of the audio devices 4 transmits and receives an audio signal mutually through the network 9. The controller 1 transmits a command message to at least one of the audio devices 4 through the network 9.

Each of the audio devices 4 that form the audio system 10 has a wired LAN function and two wireless LAN functions. Each of the audio devices 4 may start an access point using one of the two wireless LAN functions. The access point started by each of the audio devices 4 is called an internal access point 4A. The internal access point 4A is connected to one of a plurality of lower-level audio devices 4. The other wireless LAN function functions as a slave machine of the wireless LAN, and is connected to the internal access point 4A of one of a plurality of higher-level audio devices 4 or an external access point 3.

The wired LAN 2 is connected to the access point (external access point) 3. The audio device 4-1 is connected to the wired LAN 2 with a cable. The audio device 4-2 and the audio device 4-3 are connected to an internal access point 4A-1 of the higher-level audio device 4-1 by the wireless LAN. It is to be noted that a new one of the audio devices 4 may be further connected also to the lower-level of the audio device 4-2 and the audio device 4-3, and a new one of the audio devices 4 may be further connected also to the external access point 3.

In the present preferred embodiment, the network 9 is configured by the wired LAN 2, the external access point 3, and the wireless LAN including the internal access point 4A. The wired LAN 2 uses, for example, Ethernet (registered trademark: IEEE 802.3). The wireless LAN uses Wi-Fi (registered trademark: IEEE 802.11g). Moreover, the network 9 is connected from the wired LAN 2 to a delivery server 6 through the Internet 5. The delivery server 6 delivers music data to the audio devices 4.

Each of the audio devices 4 is called a root device, a node device, a leaf device, or a branch device, according to the configuration of the connection to the wired LAN 2. The root device is the top-level device connected to the wired LAN 2 directly (with a cable), and the audio device 4-1 is a root device in Fig. 1. The root device is an audio device that has first been registered at the time of configuration of the audio system 10, and serves as a reference point of the audio system 10. The root device starts the internal access point 4A to connect one of the lower-level audio devices 4 to the network and to cause the one of the lower-level audio devices 4 to participate in the audio system 10. The music information that is reproduced by the audio devices 4 (a node device and a leaf device) connected below the root device is all to be transmitted through the root device.

The node device is a middle-level device connected to the root device (internal access point 4A of the root device) by the wireless LAN, wherein the audio device 4-2 and the audio device 4-3 are node devices in Fig. 1. The node device starts the internal access point 4A to connect one of the lower-level audio devices 4 to the network and causing the one of the lower-level audio devices 4 to participate in the audio system 10. The music information that is reproduced by the audio devices 4 (a leaf device) connected below the node device is all transmitted through the node device.

In addition, although not shown in a configuration diagram illustrated in Fig. 1, the leaf device is a lower-level device connected to the node device (internal access point 4A of the node device) by the wireless LAN. Furthermore, one of the audio devices 4 connected to the external access point 3 is called a branch device.

Although each of the audio devices 4-1 to 4-3 of the audio system 10 may individually play a separate audio source (content), in the audio system 10, a plurality of audio devices may be grouped, and the grouped audio devices may synchronously play content that has been played from the same audio source. The content is music, for example. The music is stored as music data, in an audio source such as a CD or a hard disk that are included in each of the audio devices 4-1 to 4-6. The file format of the music data is MP3, WAV, SoundVQ (registered trademark), WMA (registered trademark), or AAC, for example.

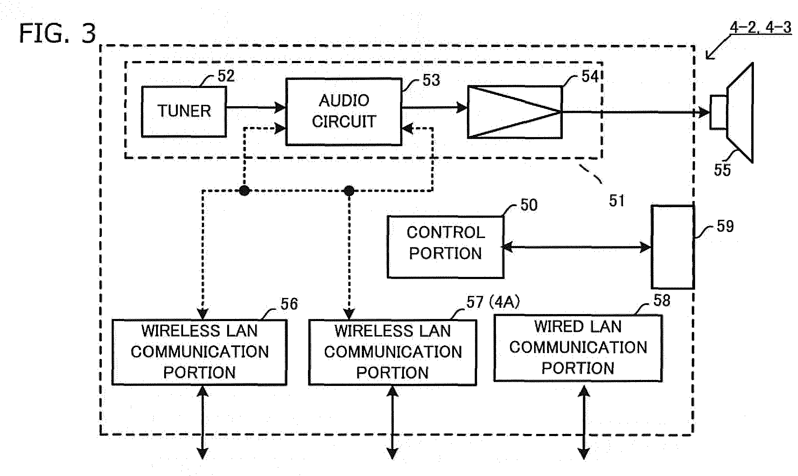

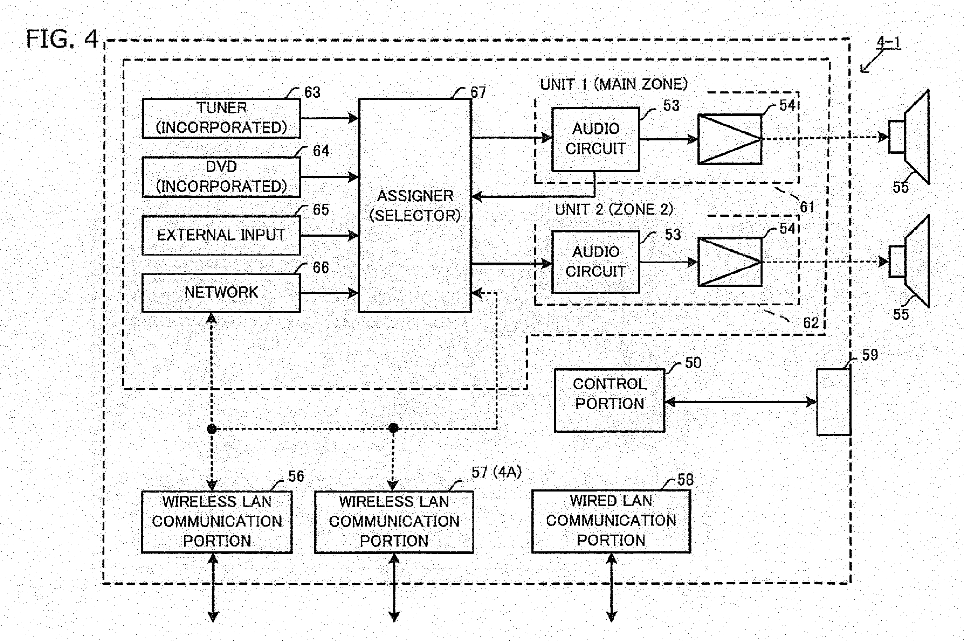

Subsequently, a description will be made of a configuration of audio devices 4 with reference to Fig. 3 and Fig. 4. Fig. 3 is a block diagram illustrating the configuration of an audio device (single zone device: the second audio device) 4-2 and an audio device 4-3 in a single zone. In Fig. 3, the audio devices 4 in a single zone each have a control portion 50, an audio processing portion 51, and an operation portion 59 and also have a wireless LAN communication portion 56, a wireless LAN communication portion 57, and a wired LAN communication portion 58. The operation portion 59 includes a volume operation element. The control portion 50 includes a CPU and a memory and stores an audio system program. The control portion 50, by the audio system program, controls the operation of the audio processing portion 51, the wireless LAN communication portion 56, the wireless LAN communication portion 57, and the wired LAN communication portion 58.

The wireless LAN communication portion 56 performs wireless communication by the wireless LAN standards such as IEEE 802.11g with the external access point 3 or the internal access point 4A of one of the higher-level audio devices 4. The wireless LAN communication portion 57 is started as an access point (internal access point 4A), and relays other audio devices (audio device 4-2 and audio device 4-3, for example) to the wired LAN 2. Further, the wireless LAN communication portion 57 is started as a temporary access point for initial connection also at the time of initial connection of one of the audio devices 4, and communicates with the controller 1 (portable phone 1). The operation at the time of initial connection will be described below. It is to be noted that both the wireless LAN communication portion 56 and the wireless LAN communication portion 57 may be integrated by operating one piece of hardware in a time-sharing manner. The wired LAN communication portion 58 has a cable connector, and performs communication by the communication standards such as IEEE 802.3 through the wired LAN 2 to the access point 3. The controller (portable phone) 1 is connected to the access point 3. The control portion 50 communicates with the controller 1 through the network 9, and transmits an operation state and receives a command message.

The audio processing portion 51 has a tuner 52, an audio circuit 53, and a power amplifier 54. The tuner 52 receives an audio signal from an FM broadcast or the Internet, and inputs the audio signal into the audio circuit 53. The audio circuit 53, after performing a process such as equalizing or volume adjustment to an input audio signal, outputs a processed audio signal to the power amplifier 54. The power amplifier 54 amplifies the input audio signal, and outputs an amplified audio signal to a speaker 55 that is connected externally. The speaker 55 emits the input audio signal as sound.

It is to be noted that the audio circuit 53, by the control of the control portion 50, processes the audio signal that has been input from other audio devices 4 through the network 9 and outputs a processed audio signal to the power amplifier 54. Furthermore, the audio circuit 53 processes the audio signal that has been played by the tuner 52 as an audio source and outputs a processed audio signal to the power amplifier 54 and also transmits the audio signal to the other audio devices 4 through the network 9. The input and output are executed as an MC link (trademark) at the time of the synchronous playing by a group. It is to be noted that these functions may be made selectable by a user separately from group play.

Fig. 4 is a block diagram of an audio device (multi zone device) 4-1 in a multi zone. In the multi zone device, a part having the same configuration as the part of the single zone device illustrated in Fig. 3 is designated by the same numeral, and a detailed description is omitted. The audio devices 4 in the multi zone, similarly to the single zone device, each also include a control portion 50, an operation portion 59, a wireless LAN communication portion 56, a wireless LAN communication portion 57, and a wired LAN communication portion 58 and also have an audio processing portion 60 that is extended more than the single zone device.

The audio processing portion 60 of the multi zone device 4-1, since covering a plurality of rooms (Room), has a first audio unit (hereinafter also referred to simply as a unit) 61 and a second audio unit 62. The first audio unit 61 and the second audio unit 62 configure a surround audio device of multiple channels (7.1 channels, for example). In the present preferred embodiment, the first audio unit 61 covers a Main Zone (the living room 70 in the present preferred embodiment), and the second audio unit 62 covers Zone 2 (the dining room 71 in the present preferred embodiment) . In addition, in a case in which this audio device 4-1 operates by full multichannel, the second audio unit 62 covers surround back LR of the Main Zone. The first audio unit 61 and the second audio unit 62 each have an audio circuit 53 and a power amplifier 54. Each power amplifier 54 is connected to respective different speakers 55. The speaker 55 of the first audio unit 61 is installed in the living room 70, and the speaker 55 of the second audio unit 62 is installed in the dining room 71. It is to be noted that the audio circuits 53 of the first audio unit 61 and the second audio unit 62 may be integrally configured.

The audio processing portion 60 has a tuner 63 and a DVD drive 64 as a source that supplies content. The tuner 63 and the DVD drive 64 are connected to an assigner (selector) 67. The assigner 67 connects all the channels of the audio source selected by the operation portion 59 or the controller 1 to the first audio unit 61, and selectively connects a channel (main channel) of a surround back LR channel, a front LR channel and to the second audio unit 62. Accordingly, in the second audio unit 62, the surround back LR of the audio that the first audio unit 61 is playing is synchronously played, or a main channel sound that the first audio unit 61 is playing is synchronously played (Main Zone Sync).

Thus, the zone function of a multi zone device is a function that makes it possible to play main channel sound that is being played in the Main Zone such as a dining, a bed room, or a different area of a large room, even with a speaker that is installed in a distance place. The zone function of a multi zone device is used, for example, when BGM is played in a larger area or when sound of a television that is placed in a living room is desired to be clearly listened in a case of cooking or doing dishes in a kitchen. The switch to zone play is performed mainly with an attached remote control.

The assigner 67, by the control of the control portion 50, inputs to the first audio unit 61 the audio signal that has been input from other audio devices 4 through the wireless LAN communication portion 56 via the network 9 or outputs a main channel sound to the second audio unit 62 through the first audio unit 61, using the above described zone function. Furthermore, the assigner 67 transmits the audio signal that has been processed in the audio circuit 53 of the first audio unit 61 to the other audio devices 4 through the network 9 using the wireless LAN communication portion 57. The input and output are executed as an MC link (trademark) at the time of the synchronous playing by a group. It is to be noted that such functions may be selected by a user separately from group play.

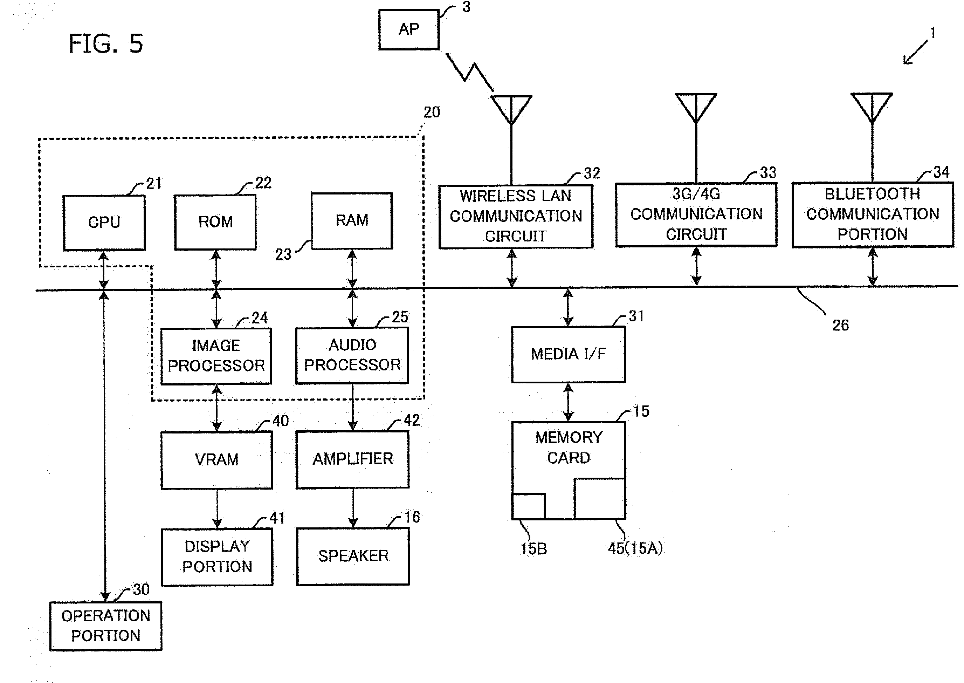

In Fig. 1, the portable phone 1 functions as an audio system controller (hereinafter referred to as a controller) 1 by starting an audio system control program 45 (see Fig. 5). The portable phone 1 (controller 1) communicates with each of the audio devices 4 that belong to the audio system 10, through the network 9. The controller 1, through this communication, controls an audio source to be played in each of the audio devices 4-1 to 4-3 in the audio system 10 (which of the audio devices 4 plays which music, which music is delivered to which of the audio devices 4, or the like, for example), the sound volume, or the like, in an integrated manner.

In addition, in the controller 1, by an operation of a user, an audio source (audio signal) is transferred between audio devices 4, and thus a group that performs synchronous playing among a plurality of audio devices 4 is set. The setting of a group is performed by selecting room in which each of the audio devices 4 are arranged. The controller 1, when a group is set up and synchronous playing by the group is instructed by a user, causes the audio devices 4 that are arranged in a selected room to synchronously play the same audio source. In this group setting, the multi zone device 4-1 may separately and independently select each zone since a separate room may be set with respect to each zone.

Subsequently, with reference to the block diagram in Fig. 5, a description will be made of a configuration of a portable phone 1. The portable phone 1 is a multifunctional telephone that is a so-called smartphone. The portable phone 1 has a 3G/4G communication function that is a portable communication network, a wireless LAN (Wi-Fi) communication function, and a Bluetooth (registered trademark) communication function. The portable phone 1, by starting the audio system control program 45 that is an application program, functions as a controller 1, communicates with the audio devices 4 of the audio system through the network 9, transmits a command message according to the operation of a user, to the audio devices 4, and thus controls the audio system.

The portable phone 1, on a bus 26, has a control portion 20, an operation portion 30, a media interface 31, a Wi-Fi communication circuit 32, a 3G/4G communication circuit 33, and a Bluetooth (registered trademark) communication portion 34. The control portion 20 includes a CPU 21, a ROM (flash memory) 22, a RAM 23, an image processor 24, and an audio processor 25. The image processor 24 is connected to a video RAM (VRAM) 40, and the VRAM 40 is connected to a display portion 41. The display portion 41 includes a display of liquid crystal. The display displays a standby screen, a telephone number, and the like. In addition, in a case of functioning as the controller 1, a screen for controlling the audio devices 4 is displayed. The audio processor 25 is connected to an amplifier 42 including a D/A converter, and the amplifier 42 is connected to a speaker 16.

The image processor 24 is provided with a GPU (Graphics Processing Unit) that generates various images such as a standby screen or a telephone number. The image processor 24, when the audio system control program 45 is started, generates the image of an audio controller according to instruction of the CPU 21, and develops the image on the VRAM 40. The image developed on the VRAM 40 is displayed on the display portion 41.

The audio processor 25 has a DSP (Digital Signal Processor) that encodes and decodes telephone call sound. The audio processor 25 outputs a decoded or generated sound signal to the amplifier 42. The amplifier 42 amplifies this sound signal and outputs a resulting sound signal to the speaker 16.

The wireless LAN communication circuit 32 performs wireless communication with the access point 3 in conformity with IEEE 802.11g standard, and communicates with the audio devices 4 through the access point 3. The 3G/4G communication circuit 33 performs voice communication and data communication through a portable telephone communication network. The Bluetooth communication portion 34 communicates with other Bluetooth compatible devices, and performs transmission and reception or the like of an audio signal, for example.

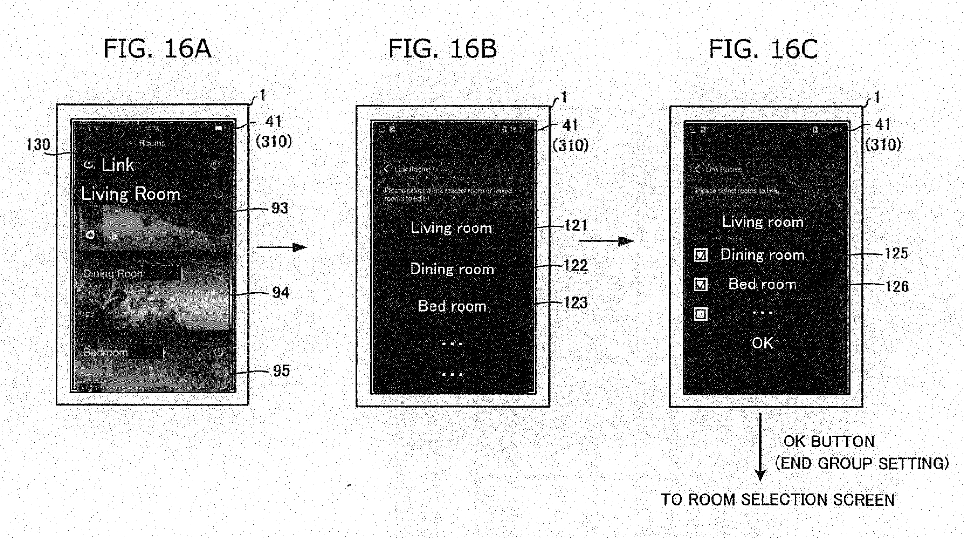

The operation portion 30 includes a touch panel 310 (mainly see Fig. 16) that is formed on the display portion 41, and detects a touch operation and a flick operation on the touch panel 310. When the audio system control program is started, on the display portion 41, a plurality of operation elements such as a setup button or a scan button, are displayed. The operation portion 30, by the touch panel 310, detects the touch operation of a user and the coordinates of the touch operation, and determines which operation element has been operated.

The media interface 31 is connected to a memory card 15. The memory card 15 is a micro SD card, for example. The audio system control program is stored in the memory card 15 or the ROM 22. In the present preferred embodiment, as illustrated in Fig. 5, the audio system control program 45 is stored in a program storage area 15A of the memory card 15. It is to be noted that the audio system control program 45 may be downloaded through the 3G/4G data communication or the wireless LAN data communication or may be previously stored in the ROM 22 or the memory card 15. In addition, to the memory card 15, a storage area 15B that stores the configuration of the audio system is set.

The ROM 22 stores a basic program for executing a telephone call and an application program of this portable phone 1. The ROM 22 is a flash memory, and besides the basic program, is also capable of storing an application program that has been downloaded. To the RAM 23, a work area that is used when the CPU 21 executes the audio system control program 45 is set.

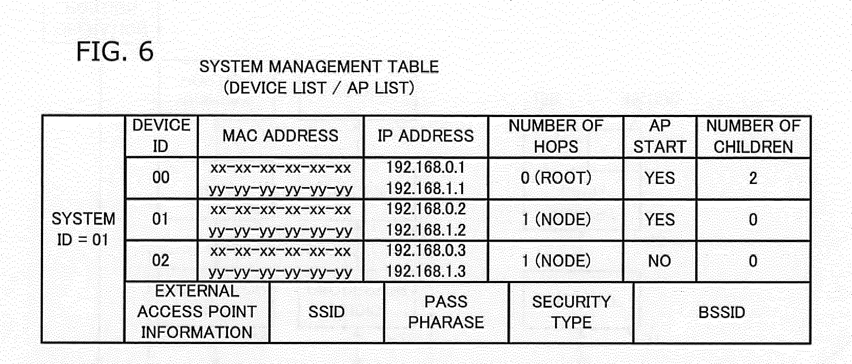

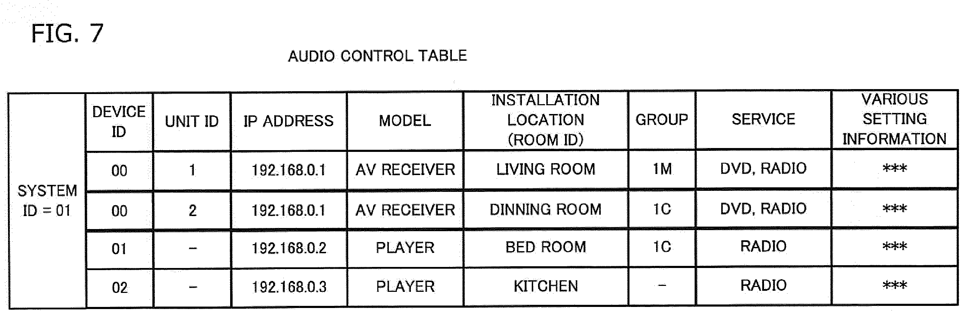

Fig. 6 and Fig. 7 each illustrate an example of a table that manages the audio system 10. Fig. 6 is a system management table that manages the connection configuration of each of the audio devices 4 in the network 9. In addition, Fig. 7 is an audio control table that manages the arrangement and operation of each of the audio devices 4 that form the audio system 10. The system management table is used mainly by the audio device 4-1 being a root device in order to manage network connections. In addition, the audio control table is used, mainly by the controller 1, to control the play of an audio source. The audio device 4-1 being a multi zone device is treated as one device in the system management table, and is managed for each zone (unit) in the audio control table.

The system management table illustrated in Fig. 6 stores the connection configuration of each of the audio devices 4 forming the audio system 10, and is created by the controller 1 at the time of configuration of the audio system 10. In addition, when a new one of the audio devices 4 is added to the audio system 10, the controller 1 updates the system management table by adding the new one of this audio devices 4. The system management table that has been created or added and updated is transmitted from the controller 1 to the audio device 4-1 being a root device.

The system management table is identified by a system ID for identifying this audio system 10. Each of the audio devices 4, associating with a device ID of each of the devices, stores information such as the higher-level side (slave machine side) and lower-level side (internal access point side) MAC address (that is, the MAC address of each of the wireless LAN communication portions 56 and 57), the higher-level side and lower-level side IP address (that is, the IP address of each of the wireless LAN communication portions 56 and 57), the number of connection stages (the number of HOPs) from the audio device 4-1 being a root device, the presence or absence of starting of an internal access point, or the number of lower-level devices (the number of children) connected to the internal access point 4A. In the system management table of Fig. 6, the multi zone device 4-1 being a root device is a device of device ID=00, and is registered as one set of an audio device regardless of the number of units to be incorporated. Then, communication with all the units is performed by the same IP address (through the same wireless LAN communication portion 56, wireless LAN communication portion 57, or wired LAN communication portion 58).

It is to be noted that, while each of the audio devices 4 has an individual IP address, respectively, this audio system 10 has a multicast address that is set up as a multicasting group. Each of the audio devices 4, by transmitting an IP packet of the system information to the multicast address, may cause all the audio devices 4 of the audio system 10 to receive this system information packet. It is to be noted that, although each of the audio devices 4 may transmit the system information packet to the IP address of each of the audio devices 4 by unicast, each of the audio devices 4, by transmitting the system information packet to the IP address by multicast, is able to reduce the load of the network 9.

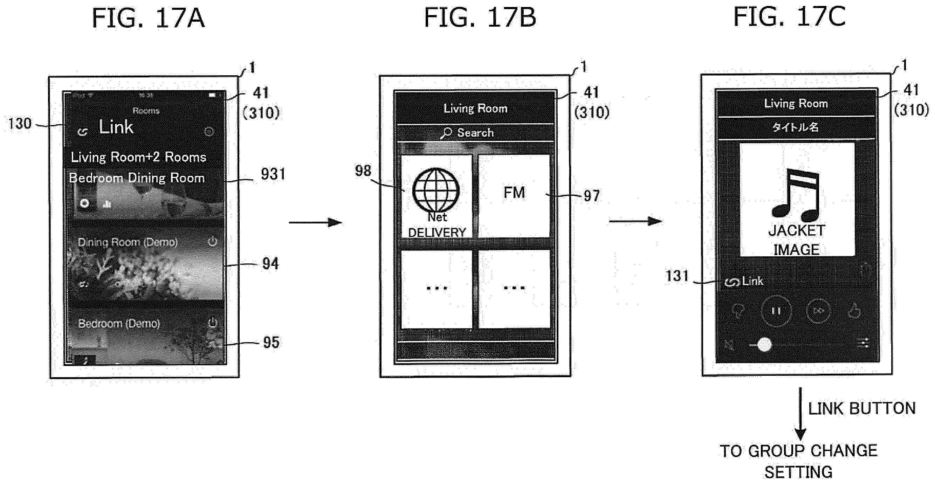

The audio control table illustrated in Fig. 7 associates a device with a device ID and a zone number, and stores various types of setting information such as the higher-level side IP address (the IP address of the wireless LAN communication portion 56) of each of the audio devices, a model, an installation location (room), a group, service, a volume value, and a display name. Each column of the audio control table and each column of the system management table are associated with each other by the device ID. In the case of the multi zone device 4-1, one set of the audio device has a plurality of audio units, and each of the audio units may be assigned to a separate room. The controller 1, based on the details of the audio control table, creates the control screen illustrated in Fig. 16 and Fig. 17, and receives an operation by a user.

The installation location is information that specifies a room in which the audio device is installed. Although a room name is displayed in the table of Fig. 7, the information of the installation location may be, for example, a room ID of the room in which the audio device is currently installed.

The group is information of a group to which each of the audio devices or the audio unit belongs, and indicates a group that performs synchronous playing of the above described content. It is to be noted that group setting by a user is performed not by directly specifying an audio device or an audio unit but is performed, by specifying a room and indirectly specifying an audio device or an audio unit that is currently installed in the room. The group is composed of one set of a master that delivers content (an audio signal) of an audio source to each of the audio devices in the group and to an audio unit, and one or more clients that receive an audio signal from the master and emit sound into the room.

The master takes charge of the supply of an audio source to the entire group and the control of synchronous playing and also functions as a device that also performs synchronous playing. A client treats a master as an audio source, receives an audio signal from the master, and processes this audio signal in the audio processing portion and then emits sound. In the item of the "group" in the audio control table, the number of the group to which the device belongs, and the type of master (M) and client (C) are stored. For example, "1M" stored in the column of unit ID=1 of the device ID=00 (audio device 4-1) of the same figure indicates a master of the group of group number 1.

The service is information indicates an audio source that each of the devices 4 may play. As illustrated in Fig. 3 and Fig. 4, the audio device 4-1 of device ID=00 may play a DVD, radio (including an FM broadcast or a net radio), and various types of network content, and the audio device 4-2 and the audio device 4-3 of device ID=01 and device ID=02 may play Radio and various types of network content. It is to be noted that, although not described in the item of service in the audio control table, each audio device (audio unit), when being a client of group play, receives an audio signal from other audio devices (other audio units), in other words, plays (emits the sound of) a received audio signal by using the other audio devices (the other audio units) as an audio source (service) . In a case in which two audio devices 4 become a master and a client, these audio devices 4 transmit and receive an audio signal through the network 9. In a case in which the first audio unit 61 of the multi zone device 4-1 is a master and the second audio unit 62 is a client, the second audio unit 62, with the connection configuration that is called Main Zone Sync, inputs the audio signal of the first audio unit 61.

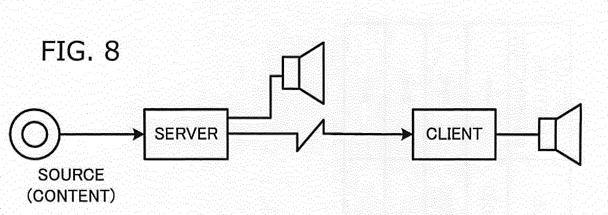

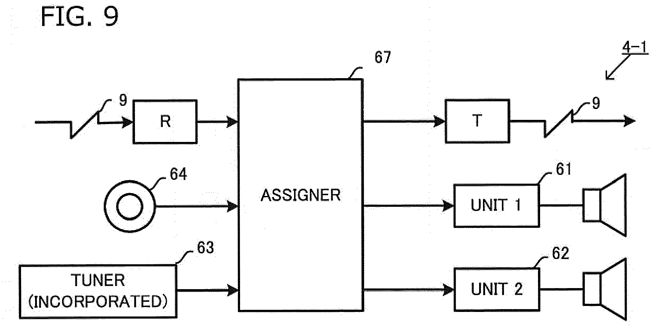

Hereinafter, a description will be made of playing of content by a group including the multi zone device 4-1. To begin with, Fig. 8 is a diagram illustrating a configuration of play by a general group. Fig. 8, in order to make the explanation easier to understand, illustrates only one client but the number of clients is not limited. A master plays a predetermined (selected by a user) audio source (content of an audio source), and emits the reproduced audio signal by itself, and also transmits the reproduced audio signal to a client through the network 9. The client emits the sound of the audio signal that has been received from the master. Subsequently, Fig. 9 is a diagram illustrating the function of the assigner 67 of the multi zone device 4-1 illustrated in Fig. 4. The assigner 67, as an input, is connected to the tuner 63, the DVD drive 64, the network 9, and to an output of the audio circuit 53 of the first audio unit 61. In addition, the assigner 67, as an output, is connected to the first audio unit (Unit 1) 61, the second audio unit (Unit 2) 62, and the network 9. The assigner 67, according to an instruction of the control portion 50 on the basis of a command of the controller 1, assigns the input to the output.

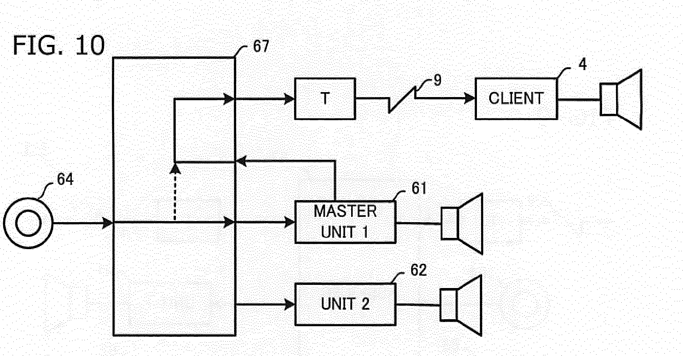

Fig. 10 illustrates a configuration of group play in a case in which the first audio unit 61 (main zone) of the multi zone device 4-1 is a master and other audio devices 4 are clients. The first audio unit 61 is connected to a predetermined (selected by a user) audio source (DVD drive 64, for example), and plays and emits the sound of the predetermined audio source, and inputs the reproduced audio signal to the assigner 67. The assigner 67 transmits this reproduced audio signal to a client 4 through the network 9. The client 4 emits the sound of an audio signal that has been received through the network 9. The first audio unit 61, in order to synchronize play timing with the client 4 that receives an audio signal through the network 9, delays the audio signal for a predetermined period of time and then emits sound. It is to be noted that the assigner 67 may directly connect the audio source to be connected to the first audio unit 61, to the network 9 and may transmit a play signal to the client (see a dotted line). It is to be also noted that, since the second audio unit 62 is not selected as a client, the second audio unit 62 does not play an audio source. It is to be also noted that the second audio unit 62, when functioning as a surround speaker of the first audio unit 61 (main zone), may output the sound of surround back LR.

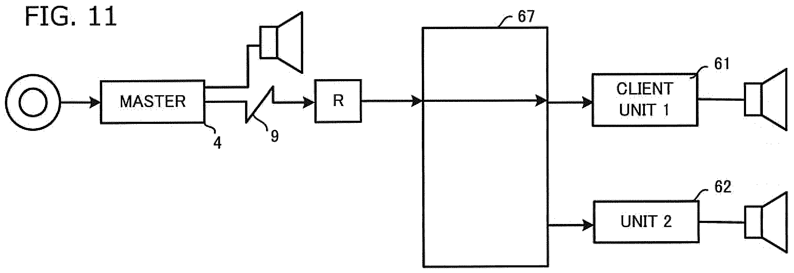

Fig. 11 illustrates a configuration of group play in a case in which other audio devices 4 are masters and the first audio unit 61 of the multi zone device 4-1 is a client. In the other audio devices 4 being masters, the sound of a predetermined (selected by a user) audio source is played and emitted, and a reproduced audio signal is transmitted to the multi zone device 4-1 through the network 9. In the multi zone device 4-1, the first audio unit 61 is a client. The assigner 67 inputs this audio signal to the first audio unit 61, and emits the sound of this audio signal. It is to be noted that, since the second audio unit 62 is not selected as a client, the second audio unit 62 does not play an audio source. It is to be also noted that the second audio unit 62, when functioning as a surround speaker of the first audio unit 61 (main zone), may output the sound of surround back LR.

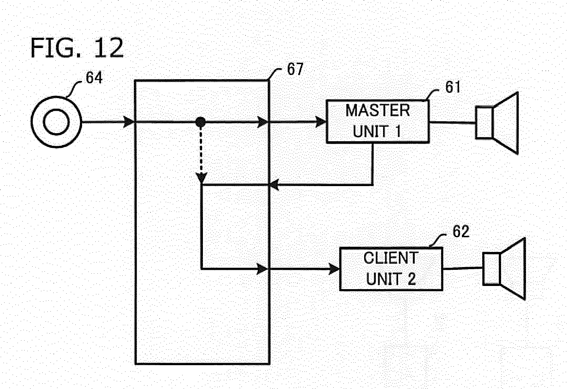

Fig. 12 illustrates a configuration of group play in a case in which the first audio unit 61 (main zone) of the multi zone device 4-1 is a master and the second audio unit 62 is a client. This configuration, using the above described zone function, operates as if an audio signal is delivered from the room of the master to the room of the client. The first audio unit 61 is connected to a predetermined (selected by a user) audio source (DVD drive 64, for example). The first audio unit 61 plays and emits the sound of the predetermined audio source, and inputs a reproduced audio signal to the assigner 67. The assigner 67 outputs this input audio signal to the second audio unit 62. The second audio unit 62 emits the sound of this audio signal. It is to be noted that the assigner 67 may also connect the audio source to be connected to the first audio unit 61 to the second audio unit 62 and may directly input an audio signal to the second audio unit 62 (see a dotted line) .

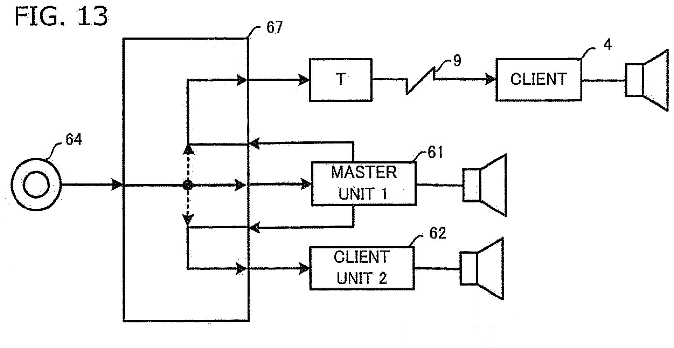

Fig. 13 illustrates a configuration of group play in a case in which the first audio unit 61 of the multi zone device 4-1 is a master and the second audio unit 62 and other audio devices 4 are clients. The first audio unit 61 is connected to a predetermined (selected by a user) audio source (DVD drive 64, for example) . The first audio unit 61 plays and emits the sound of the predetermined audio source, and inputs a reproduced audio signal to the assigner 67. The assigner 67 transmits this input audio signal to a client through the network 9, and also outputs this input audio signal to the second audio unit 62 using the zone function. The second audio unit 62 and the client 4 emit the sound of this audio signal. The first audio unit 61 and the second audio unit 62, in order to synchronize play timing with the client 4 that receives an audio signal through the network 9, delay the audio signal for a predetermined period of time and then emit sound. It is to be noted that the assigner 67 may directly connect the audio source to be connected to the first audio unit 61, to the network 9 and the second audio unit 62 (see a dotted line).

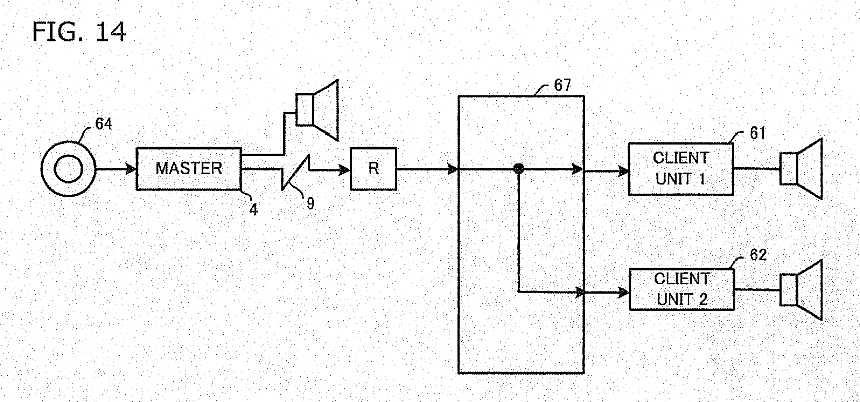

Fig. 14 illustrates a configuration of group play in a case in which other audio devices 4 are masters and the first audio unit 61 of the multi zone device 4-1 and the second audio unit 62 are clients. The other audio devices 4 being masters play and emit the sound of a predetermined (selected by a user) audio source, and transmit a reproduced audio signal to the multi zone device 4-1 through the network 9. In the multi zone device 4-1, both the first audio unit 61 and the second audio unit 62 are clients. The assigner 67 outputs this received audio signal to the first audio unit 61, and outputs the received audio signal also to the second audio unit 62 using the zone function. The first audio unit 61 and the second audio unit 62 emit the sound of this audio signal.

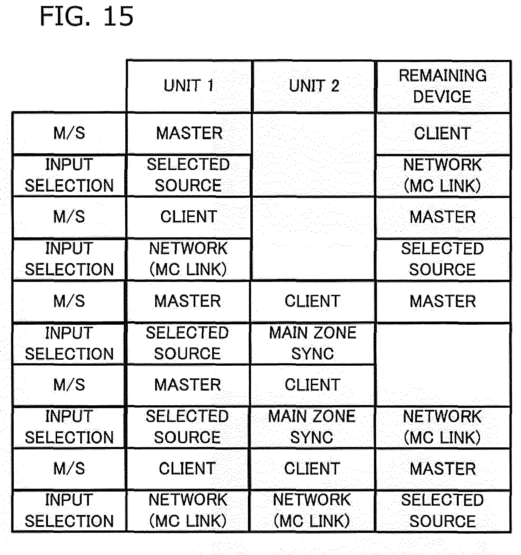

Fig. 15 is a table chart in which selection of inputs in a group of the configuration illustrated in Fig. 10 to Fig. 14 is summarized. The controller 1 stores the table as illustrated in Fig. 15, according to the configuration of the group to which play has been instructed by the user, creates a command to select an input to each device of a master and a client, and transmits the command.

While the above examples do not include an example in which the second audio unit 62 is a master, a group setting in which the second audio unit 62 makes a master may be allowed or may be prohibited. Moreover, while the above examples do not include an example in which the second audio unit 62 alone makes a client of other audio devices 4, group setting of this configuration may be allowed or may be prohibited.

Subsequently, a description will be made of a control procedure (play procedure and group setting procedure) of one of the audio devices 4 using a controller 1 with reference to a control screen (the display details of the display portion 41) illustrated in Fig. 16(A), Fig. 16(B), Fig. 16(C), Fig. 17(A), Fig. 17(B), and Fig. 17(C). Fig. 16(A) to Fig. 16(C) each illustrate an example of a control screen at the time of group setting. Fig. 17(A) to Fig. 17(C) each illustrate an example of a control screen at the time of play control after the group setting.

To begin with, a description will be made of a group setting procedure. In the group setting procedure, a master and a client of a group are selected. The controller 1 first displays a room selection screen (list screen) illustrated in Fig. 16(A). On the room selection screen, room selection buttons 93 to 95 are displayed to select one of the rooms in which an audio device (audio unit) is installed. When one of the room selection buttons is tapped (operated), selection and play of content are performed by the audio device (audio unit) that is installed in the room. In addition, the room selection screen displays a link (Link) button 130. When this link button 130 is tapped, the group setting procedure is started. When the link button 130 is selected, the group setting procedure is started and a master room selection screen illustrated in Fig. 16(B) is displayed. The master room selection screen displays master room selection buttons 121 to 123 for selecting a master to be a supply source of an audio source (content) that is synchronously played in a group. When the master room selection button 121 is operated, for example, on this screen, a living room is selected as a master room, and the first audio unit 61 of the audio device 4-1 makes a master for synchronous playing. It is to be noted that, while, in Fig. 16(B), only the three buttons 121 to 123 are displayed as master room selection buttons in order to facilitate understanding, all buttons of a room that may be selected as a master may be displayed.

When a master room is selected, a screen display is switched to a client room selection screen illustrated in Fig. 16(C). The client room selection screen displays a client room selection button 125 and a client room selection button 126 for selecting a client of the group. When the client room selection button 125 or the client room selection button 126 is tapped, a check mark is displayed on a check box in the button that has been tapped and is in a selected state. Fig. 16(C) illustrates a state in which both the client room selection button 125 and the client room selection button 126 have been tapped. In such a case, a check mark is displayed in the check box of both the client room selection button 125 and the client room selection button 126, and a dining room and a bedroom serve as a client room, and the second audio unit 62 of the audio device 4-1 and the audio device 4-2 serve as a client.

After the above procedure, when the user operates a determination (OK) button 126, the group setting is thus completed. Then, this information of the group is registered in the audio control table illustrated in Fig. 7. After completing a group setting operation, the control screen returns from the client room selection screen illustrated in Fig. 16(C) to the room selection screen.

While the example of Fig. 16(A), Fig. 16(B), and Fig. 16(C) illustrates an example in which the multi zone device 4-1 and a single zone device 4-2 are grouped, single zone devices are also grouped by a similar operation. In addition, in a case in which a plurality of multi zone devices are present, the plurality of multi zone devices are grouped in the same manner.

Fig. 17 (A) illustrates an example of the room selection screen in a case in which a group setting is present. When a group is set up, the group setting is also reflected in the room selection screen. In other words, in the example of Fig. 17(A), the room name (Bed Room and Dining Room) of a client room is added to a room selection button 931 of the living room 70 as a master room. The room selection button 931 is a selection button of a group (Living Room + 2 Rooms) . The room selection button 931 indicates that the group includes not only the living room 70. In addition, the room selection button 931 has a background image to which a blur is added, and is easy to be identified. The display mode of the room selection button 931 is the result of reflecting the group setting written into the table of the Fig. 7. The writing of the group setting to the table of Fig. 7 is performed by the procedure illustrated in Fig. 16(A), Fig. 16(B), and Fig. 16(C), and, in addition, the room selection button 94 of the dining room 71 as a client room and the room selection button 95 of the bed room 72 are grayed out and may not be operated.

Then, in a case in which the room selection button 931 of a living room group is tapped on the room selection screen illustrated in Fig. 17(A), a source selection screen of the audio device 4-1 (first audio unit 61) being a master as illustrated in Fig. 17(B) is displayed. After a source is selected on the source selection screen of Fig. 17(B), a play screen as illustrated in Fig. 17 (C) is displayed, and synchronous playing in the first audio unit 61 of the audio device 4-1, the second audio unit 62, and the audio device 4-2 in the living room 70, the dining room 71, and the bed room 72 is executed.

While the example of Fig. 17(A), Fig. 17(B), and Fig. 17(C) illustrates an example in which group play is performed by a group configured by the multi zone device 4-1 and the single zone device 4-2, group play by a group configured by only single zone devices is also performed by a similar operation. In addition, a case in which group play by a group including a plurality of multi zone devices is performed is also performed in the same manner.

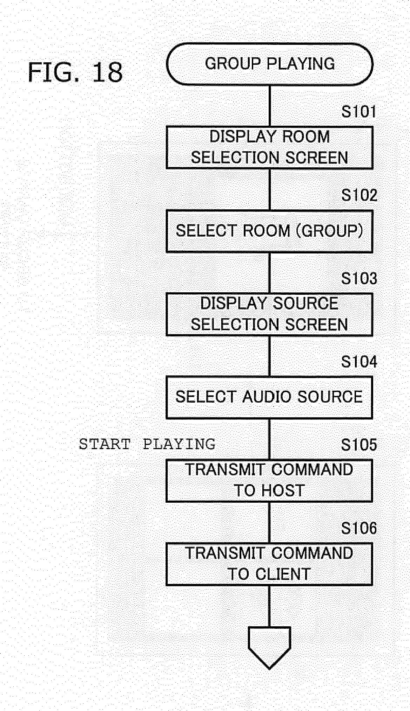

Subsequently, a description will be made of a processing operation of the controller 1 (control portion 20) at the time of group play with reference to Fig. 18. In this example, a description will be made of processing when the living room group (Living Room + 2 Rooms) illustrated in Fig. 17(A) is selected. To begin with, the controller 1 displays a room selection screen illustrated in Fig. 17(A) on the display portion 41 (S101). When a room selection button 931 to select the living room group is pressed by a user (S102), the controller 1 displays the source selection screen illustrated in Fig. 17(B). When one of audio sources is selected by the user (S104), a command to start group play of the content of the audio source to a master and a client is transmitted (S105, S106) . In other words, the controller 1 determines a device to be in charge of a master and a device to be a client based on the audio control table of Fig. 7, and plays the audio source that has been selected by the user, and also transmits to the master a command to instruct the master to transmit an audio signal of a played audio source to the client (S105). Then, the controller 1, with reference to the table of Fig. 15, transmits to each client a command to select an input so that the audio signal of the master is input (S106). It is to be noted that the controller 1, at the time of grouping, may omit a table by fixedly setting the input of the second audio unit 62 to Main Zone Sync.

Moreover, while, in the above described preferred embodiment, one audio device is installed in every one room, a plurality of sets of audio devices may be installed in one room. Furthermore, while the preferred embodiment illustrates the audio system 10 in which only one multi zone device (4-1) is present, there is no limitation in the number of multi zone devices in the present invention. In a case in which a group is formed by combining a multi zone device and other devices, the other devices may be multi zone devices.

It is to be noted that the audio device according to the present invention may be an audio visual (AV) device with a video play function or includes a system in which the audio device and such an AV device are mixed. Moreover, while, in the present preferred embodiment, the control terminal is achieved by the portable phone 1 in which the audio system control program (application program) is installed, the control terminal may be achieved by a configuration other than a portable phone. For example, the control terminal may be a tablet in which the audio system control program is installed or may be an exclusive terminal device.

### Reference Signs List

1 - Portable Phone (Controller)
2 - Wired LAN
3 - Access point (External access point)
4-1 - Multi zone device, Root device
4A (4A-1 to 4A-3) - Internal access point
10 - Audio system
20 - Control portion
30 - Operation portion
41 - Display portion

## Claims

1. A control terminal comprising:
an operation portion (30) that receives group setting in which, with respect to a first audio device (4-1) among a plurality of audio devices (4) that are connected to each other, the first audio device (4-1) having a plurality of audio output channels including a main channel and a sub channel, the main channel and the sub channel are set as respective separate groups; and
a control portion (20) that transmits a command related to the group setting to the plurality of audio devices (4).

2. The control terminal according to claim 1, wherein the first audio device (4-1) is a multi zone device (4-1) having a zone function to output a same audio signal as the main channel, to the sub channel.

3. The control terminal according to claim 1 or 2, wherein the operation portion (30) receives, as the group setting, a setting in which at least one audio device among the plurality of audio devices (4) is set as a master that reproduces and transmits an audio signal, and at least one audio device other than the master among the plurality of audio devices (4) is set as a client that receives and reproduces the audio signal from the master.

4. The control terminal according to any one of claims 1 to 3, wherein devices that have been set to the group synchronously play a same content.

5. An audio system (10) comprising:
the control terminal according to any one of claims 1 to 3; and
the plurality of audio devices (4), wherein the first audio device (4-1), to other audio devices (4-2, 4-3), transmits an audio signal through a network; performs synchronous playing between the first audio device (4-1) and the other audio devices (4-2, 4-3); from the main channel to the sub channel, outputs the audio signal using the zone function; and performs synchronous playing between the main channel and the sub channel.

6. An audio system (10) comprising:
the control terminal according to any one of claims 1 to 3;
the plurality of audio devices (4), wherein:
the plurality of audio devices (4) include a second audio device (4-2) that is different from the first audio device (4-1);
the first audio device (4-1) includes:
a first audio unit (61) that corresponds to the main channel, and
a second audio unit (62) that corresponds to the sub channel;
an audio source is selected individually for each of the first audio unit (61) and the second audio unit (62);
the operation portion (30) receives group setting in which any one of the first audio unit (61), the second audio unit (62), or the second audio device (4-2) is set as a master that reproduces and transmits an audio signal, and at least one other audio device (4-3) is set as a client that receives and reproduces the audio signal from the master; and
the control portion (20), in a case of receiving group setting in which the first audio unit (61) is set as a master and the second audio device (4-2) and the second audio unit (62) are set as clients, transmits, to the first audio device (4-1), a command to reproduce a predetermined audio source in the first audio unit (61), a command to transmit an audio signal related to the audio source that has been reproduced, to the second audio device (4-2), and a command to input the audio signal that has been output from the first audio unit (61) to the second audio unit (62) and reproduce the audio signal in the second audio unit (62); and transmits to the second audio device (4-2) a command to cause an audio signal received from the multi zone device (4-1) to be reproduced.

7. An audio system (10) comprising:
the control terminal according to any one of claims 1 to 3; and
the plurality of audio devices (4), wherein:
the plurality of audio devices (4) include a second audio device (4-2) that is different from the first audio device (4-1);
the first audio device (4-1) includes:
a first audio unit (61) that corresponds to the main channel, and
a second audio unit (62) that corresponds to the sub channel;
an audio source is selected individually for each of the first audio unit (61) and the second audio unit (62);
the operation portion (30) receives a group setting in which any one of the first audio unit (61), the second audio unit (62), or the second audio device (4-2) is set as a master that reproduces and transmits an audio signal, and at least one other audio device (4-3) is set as a client that receives and reproduces the audio signal from the master; and
the control portion (20), in a case of receiving group setting in which the second audio unit (62) is set as a master and the first audio unit (61) and the second audio unit (62) of the multi zone device (4-1) are set as clients, transmits, to the second audio device (4-2), a command to reproduce a predetermined audio source, and a command to transmit an audio signal related to the audio source that has been reproduced, to the multi zone device (4-1); and transmits to the multi zone device (4-1) a command to reproduce an audio signal received from the second audio device (4-2), in the first audio unit (61) and the second audio unit (62).

8. A method of controlling an audio system (10), comprising:
receiving group setting in which, with respect to a first audio device (4-1) among a plurality of audio devices (4) that are connected to each other, the first audio device (4-1) having a plurality of audio output channels including a main channel and a sub channel, the main channel and the sub channel are set as respective separate groups; and
transmitting a command related to the group setting to the plurality of audio devices (4).
